# FASCICULE DE BREVET EUROPEEN

(11) **EP 2 502 687 B1**
(45) Date de publication et mention de la délivrance du brevet: **16.10.2013**
(21) Numéro de dépôt: 12160429.2
(22) Date de dépôt: 20.03.2012
(51) Int. Cl.: B21K 1/30, B21K 25/00, B60B 27/00, F16C 19/18, F16C 19/38, F16C 35/063, F16C 43/04, F16D 1/033, F16D 1/072, F16D 1/076, F16C 33/60

(54) **Procédé de sertissage d'une bague de roulement sur un organe tournant**
Bördelverfahren eines Lagerrings auf einem Drehorgan
Method for crimping a bearing ring on a rotating member

(30) Priorité: 22.03.2011 FR 1152375
(43) Date de publication de la demande: 26.09.2012
(73) Titulaire: NTN-SNR Roulements, 74000 Annecy (FR)
(72) Inventeur: Champin, Cédric, 74570 Groisy (FR); Ehinger, Pierre, 74210 Faverges (FR)
(74) Mandataire: Sayettat, Julien Christian

(56) Documents cités:
- EP-A1- 2 284 021
- WO-A1-2009/147845
- DE-A1-102009 023 042
- JP-A- 2008 075 835
- JP-A- 2011 031 682
- US-A1- 2009 045 670
- US-B2- 7 806 597

## Description

L'invention concerne un procédé de sertissage d'une bague de roulement sur un organe tournant d'un palier à roulement destiné au montage d'une roue motrice de véhicule automobile. L'invention concerne également un tel palier à roulement ainsi qu'un système d'entraînement en rotation d'une roue de véhicule automobile comprenant un tel palier à roulement et un bol de transmission d'un couple moteur de rotation.

Le palier présente un organe tournant monté en rotation par rapport à un organe fixe par l'intermédiaire d'au moins une rangée de corps roulants, l'organe tournant comprenant des moyens d'association de la roue et l'organe fixe comprenant des moyens d'association à la structure du véhicule.

En particulier, au moins l'organe tournant comprend une bague de roulement rapportée sur laquelle une piste de roulement est formée afin de permettre l'assemblage du palier en prévoyant le sertissage de la bague sur l'organe après l'introduction des corps roulants.

Un tel palier permet le montage en rotation d'une roue de véhicule automobile qui, lorsqu'elle est motrice, peut être entraînée en rotation par un bol de transmission qui est actionné en rotation par le moteur du véhicule.

Pour assurer la transmission du couple de rotation entre le bol et l'organe tournant, il est connu d'utiliser un bol comprenant des moyens d'engrenage qui coopérèrent avec des moyens complémentaires formés sur l'organe tournant. En particulier, le document US-7 806 597 propose un organe tournant dont la collerette de sertissage de la bague est pourvue de dentures qui coopèrent avec des dentures du bol de transmission.

Suivant l'art antérieur, le sertissage de la bague de roulement est réalisé par déformation à froid de la matière au moyen d'un outil cannelé de sertissage orbital. Cette réalisation s'avère difficile à mettre en oeuvre sans sollicitations mécaniques qui sont potentiellement néfastes à la fiabilité du palier. En particulier, il résulte du sertissage orbital à froid une tension de l'organe tournant par retreint, ce qui nuit à une mise sous tension prédictive et mesurable du roulement en accord avec les spécifications voulues.

En outre, la réalisation suivant l'art antérieur conduit à des dentures d'engrenage dont la géométrie, notamment la hauteur, n'est pas optimisée pour fiabiliser la transmission du couple.

Le document WO 2009/147845, qui est considéré comme représentant l'état de l'art le plus proche, propose un procédé de sertissage d'une bague de roulement sur un organe tournant, au cours duquel la colerette est formée à chaud, et les moyens complémentaires d'engrenage à froid.

L'invention a pour but de résoudre les problèmes de l'art antérieur en proposant notamment un procédé de sertissage dans lequel les moyens complémentaires d'engrenage peuvent être réalisés sur la collerette de sertissage en limitant les contraintes mécaniques dans l'organe tournant, de sorte notamment à pouvoir obtenir de tels moyens dont la géométrie est optimisée pour fiabiliser la transmission du couple.

A cet effet, selon un premier aspect, l'invention propose un procédé de sertissage d'une bague de roulement sur un organe tournant d'un palier à roulement destiné au montage d'une roue motrice de véhicule automobile, ledit organe tournant comprenant des moyens d'association de la roue et une portée annulaire s'étendant entre un bord arrière et un bord avant, ledit procédé prévoyant de :
- disposer la bague sur la portée annulaire en formant une couronne libre comprenant le bord avant;
- établir un gradient thermique croissant depuis le bord arrière vers le bord avant, la température dudit bord avant étant inférieure à 900 °C;
- déformer radialement la couronne libre pour former une collerette essentiellement radiale de sertissage de la bague sur l'organe tournant, ladite déformation étant réalisée au moyen d'un outil qui est agencé pour réaliser des moyens complémentaires d'engrenage sur ladite collerette, lesdits moyens étant destinés à permettre la transmission d'un couple moteur à l'organe tournant.

Selon un deuxième aspect, l'invention propose un palier à roulement destiné au montage d'une roue motrice de véhicule automobile, ledit palier présentant un organe tournant monté en rotation par rapport à un organe fixe par l'intermédiaire d'au moins une rangée de corps roulants, ledit organe tournant comprenant des moyens d'association de la roue et une portée annulaire sur laquelle est sertie une bague par mise en oeuvre d'un tel procédé, ledit organe tournant présentant une collerette de sertissage qui est pourvue de moyens complémentaires d'engrenage destinés à permettre la transmission d'un couple moteur à l'organe tournant.

Selon un troisième aspect, l'invention propose un système d'entraînement en rotation d'une roue de véhicule automobile, ledit système comprenant un tel palier à roulement et un bol de transmission d'un couple moteur à l'organe tournant par l'intermédiaire des moyens complémentaires d'engrenage.

D'autres objets et avantages de l'invention apparaîtront dans la description qui suit, faite en référence aux figures annexées, qui sont des représentations partielles d'un :

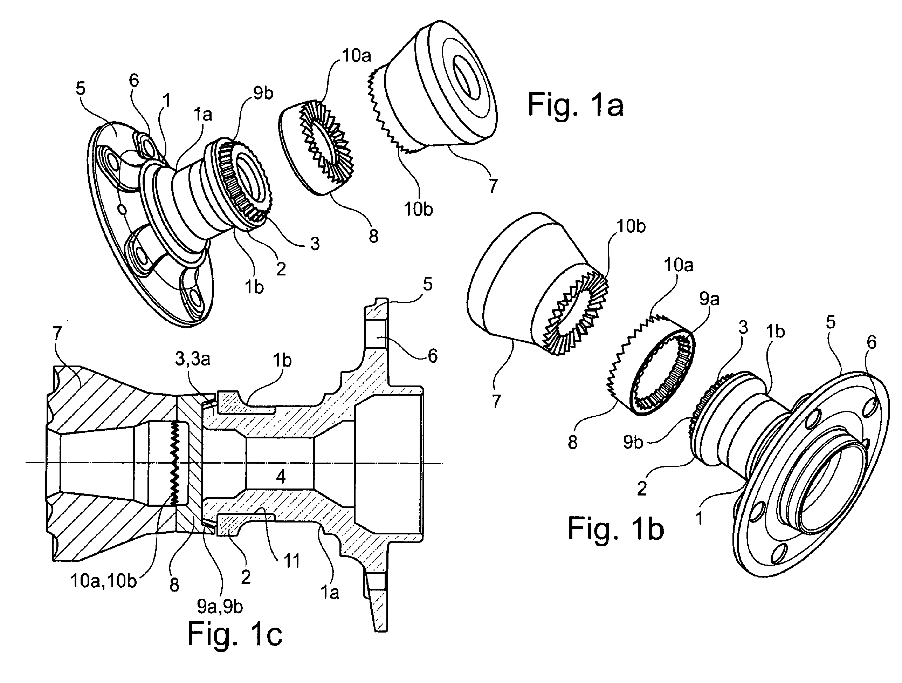

figures 1 a et 1b: système d'entraînement selon un mode de réalisation de l'invention en perspective éclatée;
figure 1c: système d'entraînement selon un mode de réalisation de l'invention en coupe longitudinale.

En relation avec ces figures, on décrit ci-dessous un système d'entraînement en rotation d'une roue de véhicule automobile comprenant un palier à roulement permettant le montage en rotation de ladite roue.

Pour ce faire, le palier présente un organe tournant 1 monté en rotation par rapport à un organe fixe par l'intermédiaire d'au moins une rangée de corps roulants. Dans les modes de réalisation représentés, l'organe intérieur 1 est tournant et l'organe extérieur est fixe, les termes « extérieur » et « intérieur » étant définis par rapport à l'axe de rotation du palier, respectivement pour une localisation éloignée et proche dudit axe. Toutefois, l'invention peut s'appliquer à un montage dans lequel l'organe extérieur est tournant et l'organe intérieur est fixe.

L'organe tournant 1, par exemple réalisé en acier, présente un alésage 4 et comprend des moyens d'association de la roue qui, sur les figures, sont formés d'une bride arrière 5 sur laquelle sont formés des trous 6 de fixation de la roue par vissage. De façon non représentée, l'organe fixe comprend des moyens d'association à la structure du véhicule, par exemple des moyens d'association à un élément de suspension dudit véhicule.

Le palier représenté comprend deux rangées de billes qui sont espacées axialement, lesdites rangées étant chacune disposées entre deux pistes 1a, 1 b de roulement formées sur respectivement un organe 1 pour guider la rotation de l'organe tournant 1. Plus précisément, l'organe tournant 1 comprend une bague intérieure 2 rapportée sur laquelle la piste de roulement avant 1 b est formée, les termes « avant » et « arrière » étant définis pour l'organe tournant 1 respectivement à gauche et à droite sur la figure 1 c.

Cette réalisation permet l'assemblage du palier en prévoyant, après l'introduction des billes entre les organes 1, la disposition de la bague 2 autour de l'organe tournant 1 et son immobilisation axiale vers l'avant par sertissage.

On décrit ci-dessous un procédé de sertissage de la bague 2 de roulement dans lequel ladite bague est disposée sur une portée annulaire 11 qui s'étend sur l'organe tournant 1 entre un bord arrière et un bord avant. Lors de cette disposition, la bague 2 coulisse axialement sur la portée annulaire 11 en formant une couronne libre 3a qui comprend le bord avant.

Le procédé prévoit d'établir un gradient thermique croissant depuis le bord arrière vers le bord avant, la température dudit bord avant étant inférieure à 900°C, et de déformer radialement la couronne libre 3a pour former une collerette 3 essentiellement radiale de sertissage de la bague 2 sur l'organe tournant 1. En particulier, le gradient thermique est établi pour limiter les efforts nécessaires à la déformation afin de limiter les contraintes mécaniques induites dans l'organe tournant 1, tout en protégeant de la température les parties du palier les plus sensibles.

Selon une réalisation avantageuse, le gradient est établi de sorte que la température du bord avant soit de l'ordre de 750°C, le bord arrière pouvant être à température ambiante.

L'établissement du gradient thermique peut comprendre le chauffage, notamment par induction, de la portée annulaire 11, dans l'alésage 4 ou depuis l'extérieur de l'organe tournant 1 en fonction de sa géométrie. En outre, on peut prévoir un refroidissement pour établir le gradient thermique, par exemple en utilisant une circulation de fluide maintenu à température constante au voisinage du bord arrière de la portée annulaire 11.

La déformation de la couronne libre 3a peut être réalisée par déplacement relatif axial d'un outil et de ladite couronne libre. Selon une réalisation, la déformation est réalisée en un ou plusieurs coups axiaux de l'outil sur la couronne libre 3a, par exemple au moyen d'une presse.

Selon une réalisation, la déformation de la couronne libre 3a comprend la réalisation d'une préforme de collerette 3 puis la déformation de ladite préforme pour former la collerette 3. Ces deux étapes peuvent être réalisées en deux coups de presse, en utilisant un même outil ou un outil différent pour réaliser la préforme et la collerette 3. En particulier, le choix du nombre de coups de presse et de leur puissance dépend de l'épaisseur de la couronne libre 3a et de la géométrie souhaitée pour la collerette 3.

Après la formation de la collerette 3, le procédé prévoit le refroidissement contrôlé de la portée annulaire 11, par exemple au moyen d'une circulation de fluide maintenu à température constante, afin d'obtenir la tension finale souhaitée dans l'organe tournant 1. En variante, on peut laisser refroidir la portée annulaire 11 à l'air libre.

Dans le cas du montage d'une roue motrice, l'entraînement en rotation de ladite roue peut être réalisé par un bol 7 de transmission d'un couple moteur à l'organe tournant 1, ledit bol étant actionné en rotation par le moteur du véhicule.

Pour assurer la transmission du couple de rotation entre le bol 7 et l'organe tournant 1, ledit organe tournant comprend des moyens complémentaires d'engrenage 9b. Le procédé de sertissage prévoit que la déformation de la couronne libre 3a soit réalisée au moyen d'un outil qui est agencé pour réaliser les moyens complémentaires d'engrenage 9b sur la collerette 3.

Cette réalisation, en chauffant la couronne libre 3a, permet de faciliter la réalisation des moyens complémentaires d'engrenage 9b, notamment en pouvant obtenir des géométries qui sont optimisées pour fiabiliser la transmission du couple.

Le système d'entraînement représenté comprend une pièce d'interface 8 qui est interposée entre l'organe tournant 1 et le bol 7 de transmission, ladite pièce d'interface comprenant des moyens d'engrenage avant 9a coopérant avec les moyens complémentaires 9b formés sur la collerette 3 et des moyens d'engrenage arrière 10a coopérant avec des moyens complémentaires 10b formés sur le bol 7 de transmission. Dans la description, les termes « avant » et « arrière » sont définis pour la pièce d'interface 8 respectivement à droite et à gauche sur la figure 1 c.

Selon une réalisation non représentée, le bol 7 de transmission comprend des moyens d'engrenage coopérant avec les moyens complémentaires d'engrenage 9b de la collerette 3 pour assurer la transmission du couple de rotation entre ledit bol de transmission et l'organe tournant 1.

Dans le mode de réalisation représenté, la pièce d'interface 8 présente une géométrie annulaire, les moyens d'engrenage 9a, 10a étant répartis circonférentiellement autour d'une partie respectivement avant et arrière de ladite pièce d'interface. En particulier, la pièce d'interface 8 peut être réalisée en acier, par exemple par usinage ou par forgeage à chaud, à froid ou à température intermédiaire.

Les moyens d'engrenage 9a, 10a peuvent être réalisés préalablement, par exemple lors de la fabrication de la pièce d'interface 8, ou être formés lors de l'assemblage de l'ensemble bol 7 de transmission - pièce d'interface 8 - organe tournant 1, par exemple par incrustation des moyens complémentaires 9b, 10b dans la pièce d'interface 8 lors du serrage axial d'assemblage.

Sur les figures, les moyens d'engrenage 9a, 10a sont réalisés sous la forme de dentures, les moyens complémentaires 9b, 10b comprenant des dentures dans lesquelles les dentures des moyens d'engrenage 9a, 10a sont immobilisées en rotation. Pour ce faire, le procédé de sertissage prévoit que l'outil de déformation présente des cannelures qui sont agencées pour réaliser, lors de la déformation de la couronne libre 3a, des dentures 9b axiales et/ou radiales d'engrenage sur la collerette 3.

En particulier, la profondeur et la répartition des dentures 9a, 9b, 10a, 10b permet la solidarisation en rotation de l'ensemble bol 7 de transmission - pièce d'interface 8 - organe tournant 1, de sorte à transmettre le couple moteur entre ledit bol et ledit organe tournant.

La pièce d'interface 8 présente une portée arrière sur laquelle sont formées des dentures radiales 10a, le bol 7 de transmission présentant une portée avant sur laquelle des dentures complémentaires 10b sont formées. En particulier, les dentures 10a, 10b peuvent être convergentes et auto-centrantes, par exemple de type HIRTH. Toutefois, l'invention n'est pas limitée à une réalisation particulière des moyens d'engrenage arrière 10a puisqu'elle dépend de la configuration des dentures 10b qui sont prévues sur le bol 7 de transmission.

En relation avec les figures, les dentures 9b s'étendent axialement sur une portée avant de la collerette 3 de sertissage de la bague 2, la pièce d'interface 8 présentant un alésage dans laquelle des dentures axiales 9a sont formées. En particulier, la collerette 3 présente une portée annulaire extérieure sur laquelle s'étendent les dentures 9b, l'extrémité avant de la pièce d'interface 8 étant disposée en butée axiale sur la bague 2.

Par ailleurs, les dentures 9b sont divergentes et les dentures 9a sont convergentes pour assurer, lors de l'assemblage de la pièce d'interface 8 sur l'organe tournant 1, le centrage et le blocage axial de ladite pièce d'interface par rapport audit organe tournant.

## Revendications

1. Procédé de sertissage d'une bague (2) de roulement sur un organe tournant (1) d'un palier à roulement destiné au montage d'une roue motrice de véhicule automobile, ledit organe tournant comprenant des moyens d'association de la roue (5,6) et une portée annulaire (11) s'étendant entre un bord arrière et un bord avant, ledit procédé prévoyant de :
- disposer la bague (2) sur la portée annulaire (11) en formant une couronne libre (3a) comprenant le bord avant ;
- établir un gradient thermique croissant depuis le bord arrière vers le bord avant, la température dudit bord avant étant inférieure à 900 °C ;
- déformer radialement la couronne libre (3a) pour former une collerette (3) essentiellement radiale de sertissage de la bague (2) sur l'organe tournant (1), ladite déformation étant réalisée au moyen d'un outil qui est agencé pour réaliser des moyens complémentaires d'engrenage (9b) sur ladite collerette, lesdits moyens étant destinés à permettre la transmission d'un couple moteur à l'organe tournant (1).

2. Procédé de sertissage selon la revendication 1, **caractérisé en ce que** le gradient thermique est établi de sorte que la température du bord avant soit de l'ordre de 750°C.

3. Procédé de sertissage selon la revendication 1 ou 2, **caractérisé en ce que** le gradient thermique est établi de sorte que le bord arrière soit à température ambiante.

4. Procédé de sertissage selon l'une quelconque des revendications 1 à 3, **caractérisé en ce que** l'établissement du gradient thermique comprend le chauffage de la portée annulaire (11).

5. Procédé de sertissage selon l'une quelconque des revendications 1 à 4, **caractérisé en ce que** l'établissement du gradient thermique comprend un refroidissement.

6. Procédé de sertissage selon l'une quelconque des revendications 1 à 5, **caractérisé en ce que** la déformation de la couronne libre (3a) est réalisée par déplacement relatif axial de l'outil et de ladite couronne libre.

7. Procédé de sertissage selon la revendication 6, **caractérisé en ce que** la déformation de la couronne libre (3a) est réalisée en un ou plusieurs coups axiaux de l'outil sur ladite couronne libre.

8. Procédé de sertissage selon l'une quelconque des revendications 1 à 7, **caractérisé en ce que** la déformation de la couronne libre (3a) comprend la réalisation d'une préforme de collerette (3) puis la déformation de ladite préforme pour former la collerette (3).

9. Procédé de sertissage selon l'une quelconque des revendications 1 à 8, **caractérisé en ce qu'**il prévoit le refroidissement contrôlé de la portée annulaire (11) après la formation de la collerette (3).

10. Procédé de sertissage selon l'une quelconque des revendications 1 à 9, **caractérisé en ce que** l'outil présente des cannelures qui sont agencées pour réaliser, lors de la déformation de la couronne libre (3a), des dentures (9b) axiales et/ou radiales d'engrenage sur la collerette (3).

11. Palier à roulement destiné au montage d'une roue motrice de véhicule automobile, ledit palier présentant un organe tournant (1) monté en rotation par rapport à un organe fixe par l'intermédiaire d'au moins une rangée de corps roulants, ledit organe tournant comprenant des moyens d'association de la roue et une portée annulaire (11) sur laquelle est sertie une bague (2) de roulement par mise en oeuvre d'un procédé selon l'une quelconque des revendications 1 à 10, ledit organe tournant présentant une collerette (3) de sertissage qui est pourvue de moyens complémentaires d'engrenage (9b) destinés à permettre la transmission d'un couple moteur à l'organe tournant (1).

12. Système d'entraînement en rotation d'une roue de véhicule automobile, ledit système comprenant un palier à roulement selon la revendication 11 et un bol (7) de transmission d'un couple moteur à l'organe tournant (1) par l'intermédiaire des moyens complémentaires d'engrenage (9b).

13. Système d'entraînement selon la revendication 12, **caractérisé en ce que** le bol (7) de transmission comprend des moyens d'engrenage coopérant avec les moyens complémentaires d'engrenage (9b) de la collerette (3) pour assurer la transmission du couple de rotation entre ledit bol de transmission et l'organe tournant (1).

14. Système d'entraînement selon la revendication 12, **caractérisé en ce qu'**il comprend en outre une pièce d'interface (8) qui est interposée entre l'organe tournant (1) et le bol (7) de transmission, ladite pièce d'interface comprenant des moyens d'engrenage avant (9a) coopérant avec les moyens complémentaires d'engrenage (9b) de la collerette (3) et des moyens d'engrenage arrière (10a) coopérant avec des moyens d'engrenage complémentaires (10b) formés sur le bol (7) de transmission pour assurer la transmission du couple de rotation entre ledit bol de transmission et ledit organe tournant.

## Patentansprüche

1. Verfahren zum Crimpen eines Lagerringes (2) auf ein drehendes Teil (1) eines Wälzlagers, das für die Montage eines Antriebsrades eines Kraftfahrzeugs bestimmt ist, wobei das besagte drehende Teil Verbindungsvorrichtungen für das Rad (5, 6) und eine ringförmige Auflagefläche (11) enthält, die sich zwischen einem hinteren Rand und einem vorderen Rand erstreckt, und in dem besagten Verfahren vorgesehen ist,:
- den Ring (2) auf der ringförmigen Auflagefläche (11) anzuordnen, um einen freien Kranz (3a) mit dem vorderen Rand zu bilden;
- einen vom hinteren Rand zum vorderen Rand ansteigenden Wärmegradienten zu bilden, wobei die Temperatur des besagten vorderen Rands unter 900°C liegt;
- den freien Kranz (3a) radial zu verformen, um einen im Wesentlichen radialen Kragenring (3) zum Crimpen des Ringes (2) auf das drehende Teil (1) zu bilden, wobei die besagte Verformung mithilfe eines Werkzeuges erfolgt, das angeordnet ist, um ergänzende Verzahnungsvorrichtungen (9b) auf dem besagten Kragenring zu bilden, und die besagten Vorrichtungen dazu bestimmt sind, die Übertagung eines Antriebsmoments auf das drehende Teil (1) zu ermöglichen.

2. Crimpverfahren nach Anspruch 1, **dadurch gekennzeichnet, dass** der Wärmegradient derart erstellt wird, dass die Temperatur am vorderen Rand in etwa bei 750°C liegt.

3. Crimpverfahren nach Anspruch 1 oder 2, **dadurch gekennzeichnet, dass** der Wärmegradient derart erstellt wird, dass der hintere Rand auf Umgebungstemperatur ist.

4. Crimpverfahren nach irgendeinem der Ansprüche 1 bis 3, **dadurch gekennzeichnet, dass** die Erstellung des Wärmegradienten die Erhitzung der ringförmigen Auflagefläche (11) vorsieht.

5. Crimpverfahren nach irgendeinem der Ansprüche 1 bis 4, **dadurch gekennzeichnet, dass** die Erstellung des Wärmegradienten eine Abkühlung vorsieht.

6. Crimpverfahren nach irgendeinem der Ansprüche 1 bis 5, **dadurch gekennzeichnet, dass** die Verformung des freien Kranzes (3a) durch die axiale Bewegung des Werkzeugs und des besagten feien Kranzes zueinander erzeugt wird.

7. Crimpverfahren nach Anspruch 6, **dadurch gekennzeichnet, dass** die Verformung des freien Kranzes (3a) in einem oder mehreren axialen Schlägen des Werkzeugs auf den besagten freien Kranz geschieht.

8. Crimpverfahren nach irgendeinem der Ansprüche 1 bis 7, **dadurch gekennzeichnet, dass** die Verformung des freien Kranzes (3a) die Herstellung eines Kragenringrohlings (3) und danach die Verformung des besagten Rohlings vorsieht, um den Kragenring (3) zu bilden.

9. Crimpverfahren nach irgendeinem der Ansprüche 1 bis 8, **dadurch gekennzeichnet, dass** es die kontrollierte Abkühlung der ringförmigen Auflagefläche (11) nach der Bildung des Kragenringes (3) vorsieht.

10. Crimpverfahren nach irgendeinem der Ansprüche 1 bis 9, **dadurch gekennzeichnet, dass** das Werkzeug Längsnuten aufweist, die angeordnet sind, um bei der Verformung des freien Kranzes (3a) axiale und/ oder radiale Verzahnungen (9b) für den Eingriff auf dem Kragenring (3) zu erzeugen.

11. Wälzlager, das für die Montage eines Antriebsrades eines Kraftfahrzeugs bestimmt ist, wobei das besagte Lager ein drehendes Teil (1) aufweist, das drehend über zumindest eine Reihe an Drehkörpern im Verhältnis zu einem feststehenden Teil montiert ist, und das besagte drehende Teil Verbindungsvorrichtungen für das Rad und eine ringförmige Auflagefläche (11) enthält, auf die durch die Umsetzung eines Verfahrens nach irgendeinem der Ansprüche 1 bis 10 ein Lagerring (2) gecrimpt wird, und das besagte Teil einen Kragenring (3) zum Crimpen aufweist, der mit ergänzenden Verzahnungsvorrichtungen (9b) versehen ist, die dazu bestimmt sind, die Übertragung eines Antriebsmoments auf das drehende Teil (1) zu ermöglichen.

12. System für den Drehantrieb eines Kraftfahrzeugrades, wobei das besagte System ein Wälzlager nach Anspruch 11 und ein Gehäuse (7) zur Übertragung eines Antriebsmoments auf das drehende Teil (1) durch die ergänzenden Verzahnungsvorrichtungen (9b) umfasst.

13. Antriebssystem nach Anspruch 12, **dadurch gekennzeichnet, dass** im Antriebsgehäuse (7) Verzahnungsvorrichtungen enthalten sind, die mit den ergänzenden Verzahnungsvorrichtungen (9b) des Kragenrings (3) zusammenwirken, um für die Übertragung des Drehmoments zwischen dem besagten Antriebsgehäuse und dem drehenden Teil (1) zu sorgen.

14. Antriebssystem nach Anspruch 12, **dadurch gekennzeichnet, dass** es darüber hinaus eine Schnittstelle (8) enthält, die zwischen dem drehenden Teil (1) und dem Antriebsgehäuse (7) eingesetzt wird, wobei in der besagten Schnittstelle vordere Verzahnungsvorrichtungen (9a) enthalten sind, die mit den ergänzenden Verzahnungsvorrichtungen (9b) des Kragenrings (3) zusammenwirken, sowie hintere Verzahnungsvorrichtungen (10a), die mit den ergänzenden Verzahnungsvorrichtungen (10b) zusammenwirken, die im Antriebsgehäuse (7) gebildet werden, um für die Übertragung des Drehmoments zwischen dem besagten Antriebsgehäuse und dem besagten drehenden Teil zu sorgen.

## Claims

1. Method for crimping a bearing ring (2) on a rotating member (1) of a roller bearing intended for the mounting of a drive wheel of a motor vehicle, said rotating member comprising means for associating the wheel (5, 6) and an annular bearing surface (11) extending between a rear edge and a front edge, said method providing for the:
- arranging of the ring (2) on the annular bearing surface (11) by forming a free crown (3a) comprising the front edge;
- establishing a thermal gradient increasing from the rear edge towards the front edge, the temperature of said front edge being less than 900°C;
- deforming the free crown (3a) radially in order to form a substantially radial flange (3) for crimping the ring (2) on the rotating member (1), said deformation being realised by means of a tool which is arranged for realising complementary gear units (9b) on said flange, said means being intended to allow for the transmission of an engine torque to the rotating member (1).

2. Method for crimping according to claim 1, **characterised in that** the thermal gradient is established in such a way that the temperature of the front edge is of a magnitude of 750°C.

3. Method for crimping according to claim 1 or 2, **characterised in that** the thermal gradient is established in such a way that the rear edge is at ambient temperature.

4. Method for crimping according to any of claims 1 to 3, **characterised in that** the establishing of the thermal gradient comprises the heating of the annular bearing surface (11).

5. Method for crimping according to any of claims 1 to 4, **characterised in that** the establishing of the thermal gradient comprises a cooling.

6. Method for crimping according to any of claims 1 to 5, **characterised in that** the deformation of the free crown (3a) is carried out by axial relative displacement of the tool and of said free crown.

7. Method for crimping according to claim 6, **characterised in that** the deformation of the free crown (3a) is carried out in one or several axial strokes of the tool on said free crown.

8. Method for crimping according to any of claims 1 to 7, **characterised in that** the deformation of the free crown (3a) comprises the carrying out of a flange preform (3) then the deformation of said preform in order to form the flange (3).

9. Method for crimping according to any of claims 1 to 8, **characterised in that** it provides the controlled cooling of the annular bearing surface (11) after the formation of the flange (3).

10. Method for crimping according to any of claims 1 to 9, **characterised in that** the tool has grooves which are arranged in order to realise, during the deformation of the free crown (3a), of axial and/or radial gear teeth (9b) on the flange (3).

11. Roller bearing intended for the mounting of a drive wheel of a motor vehicle, said bearing having a rotating member (1) mounted in rotation in relation to a fixed member by the intermediary of at least one row of rolling bodies, said rotating member comprising means for associating the wheel and an annular bearing surface (11) whereon is crimped a bearing ring (2) through the implementation of a method according to any of claims 1 to 10, said rotating member having a flange (3) for crimping which is provided with complementary gear units (9b) intended to allow for the transmission of an engine torque to the rotating member (1).

12. System for driving in rotation a wheel of a motor vehicle, said system comprising a roller bearing according to claim 11 and a cone (7) for transmitting an engine torque to the rotating member (1) by the intermediary of the complementary gear units (9b).

13. System for driving according to claim 12, **characterised in that** the transmission cone (7) comprises gear units cooperating with the complementary gear units (9b) of the flange (3) in order to provide the transmission of the driving torque between said transmission cone and the rotating member (1).

14. System for driving according to claim 12, **characterised in that** further comprises a part for interference (8) which is interposed between the rotating member (1) and the transmission cone (7), said part for interference comprising front gear units (9a) cooperating with the complementary gear units (9b) of the flange (3) and rear gear units (10a) cooperating with complementary gear units (10b) formed on the transmission cone (7) in order to provide for the transmission of the driving torque between said transmission cone and said rotating member.
